# EUROPEAN PATENT SPECIFICATION

(11) **EP 3 521 076 B1**
(45) Date of publication and mention of the grant of the patent: **25.11.2020**
(21) Application number: 18154419.8
(22) Date of filing: 31.01.2018
(51) Int. Cl.: B60J 5/10, B60J 5/12

(54) **VEHICLE WITH A REAR DOOR AND METHOD OF OPERATING SUCH A REAR DOOR**
FAHRZEUG MIT HECKKLAPPE UND BETRIEBSVERFAHREN FÜR EINE SOLCHE HECKKLAPPE
VÉHICULE ÉQUIPÉ D'UNE PORTE ARRIÈRE ET PROCÉDÉ DE FONCTIONNEMENT D'UNE TELLE PORTE ARRIÈRE

(43) Date of publication of application: 07.08.2019
(73) Proprietor: Ford Otomotiv Sanayi Anonim Sirketi, 34885 Istanbul (TR)
(72) Inventor: Kose, Hasan, Sultanbeyli/Istanbul (TR); Gülüm, Ali, Kadiköy/Istanbul (TR); Kürklü, Ilhan, 34893 Pendik / ISTANBUL (TR); Ekinci, Erol, Derince - Kocaeli (TR)
(74) Representative: Illing, Rolf

(56) References cited:
- WO-A1-2017/046460
- JP-A- H06 144 013
- JP-A- 2005 132 171
- US-B1- 7 017 979

## Description

The present invention relates in general to vehicles according to the preamble of claim 1, with a rear door or rear hatch. More in particular, the present invention relates to a mounting mechanism for mounting a rear door of a so called "small commercial vehicle", also known as a "van" or a "delivery truck". The present invention also relates to a method of operating such a rear door.

Small commercial vehicles of the type typically used for delivery of small and lightweight goods to consumers at their homes are known in the art. These vehicles typically have two front doors (one for the driver and one for the passenger), but often have no back-doors and no slidable door at a side of the vehicle, but they have a door or hatch at the rear of the vehicle which grants access to the loading compartment.

Several systems for mounting the rear door are used, for example:
- a vehicle with two individual upright rear door panels, each spanning about the full height and about half the width of the vehicle;
- a vehicle with a liftgate system comprising a single panel used as a platform sized for closing a rear opening of the vehicle, and having a hydraulic lifting mechanism. The liftgate can be oriented vertically for closing the rear opening, can be tilted to a horizontal position substantially at the same level as a loading compartment of the vehicle for easily moving (e.g. shifting) goods from inside the vehicle to the platform, and can be lowered to ground level for actually unloading the goods, while maintaining a substantially horizontal position.

A problem with these mechanisms is that they require a relatively large amount of free space behind the vehicle for unloading goods, e.g. in the order of the height of the vehicle opening in the case of the liftgate, or e.g. in the order of half the width of the vehicle opening plus about 1.5 m for standing behind the door with a box. That space is not always available.

To offer an automatic opening/closing device for vehicular door not allowing the door to collide with any obstacle during door opening and closing operation, JP H06 144 013 A discloses a guide rail which is provided in the vertical direction on the inside surface of right and left side panels on the opened area of a vehicle and a roller attached to the tip of protruded parts provided protrusively on both side edges of the rear door makes a sliding move along the guide rail. It is so constructed as to cause the rear door to move along the guide rail in the vertical direction by means of winding and drawing out a wire connected to the rear door by virtue of a wire winding mechanism through a pulley. Consequently, the rear door never collides with a person or a wall in the position behind the vehicle because the rear door is opened and closed without projecting backward the slant in the rear end of the vehicle.

To provide a gate structure for a vehicle body which reduces an opening/closing space required in a rear portion of the vehicle body because a relatively large tail gate is turned around a hinge at an upper end of a rear part of the vehicle body when the tail gate is sprung to be opened/closed, JP 2005 132 171 A discloses a slide rail to guide a tail gate provided in a vicinity of a rear opening of a vehicle body. In the slide rail, a vertical part to vertically move the tail gate, a horizontal part to longitudinally move the tail gate, and a curved part to connect the vertical part to the horizontal part are continuously integrated with each other. A roller provided on the tail gate is rolled on the slide rail.

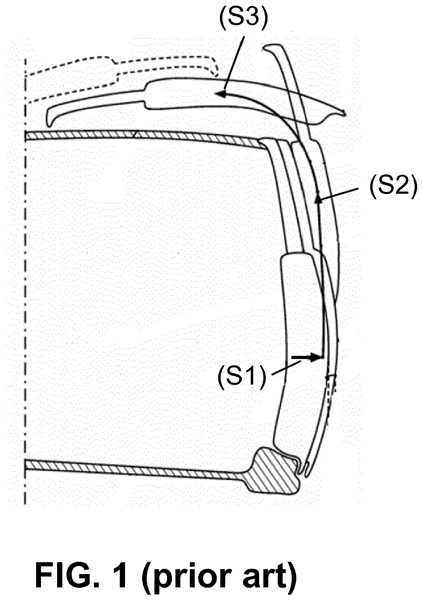

DE 10 2015 012 144 A1 discloses a motor vehicle with a door wherein the vehicle door is movable between a closed position and a first intermediate position (after a first, transversal translation), and a second intermediate position (after a second, upward translation), and a fully open position (after a pivoting movement). The vehicle with the door in its fully open position is replicated herein as FIG. 1.

DE 199 07 391 A1 discloses a vehicle with a hinge-mounting component which allows translatory movement of the hatchback.

US 2012212006 A1 discloses a hatch system for opening and closing a side door.

EP 1 454 782 A1 disloses a vehicle with a rear door movable between a closed position, and an open position above the vehicle.

US 6,386,613 B1 discloses a four bar link between a walled cargo area of a truck and a rigid rear cargo door.

WO 2017042391 A1 describes a system for opening a tailgate.

The present invention has the object to provide a vehicle with a rear door mounting system, and a method of operating a rear door.

It is a particular object of embodiments of the present invention to provide a vehicle with a rear door mounting system which requires less clearance behind the vehicle for allowing the rear door to be completely opened.

It is a particular object of embodiments of the present invention to provide a rear door mounting system with a single door panel.

It is a particular object of embodiments of the present invention to provide a rear door which can be partially opened for quickly unloading goods.

These objects are achieved by a vehicle with a rear door mounting system having the features of claim 1, and by a method of operating a rear door having the features of claim 11. Further, particularly advantageous embodiments of the invention are disclosed in the dependent claims.

It should be noted that the individual features listed in the description below can be combined in any technically meaningful way with each other and show further embodiments of the invention. The description of the invention is additionally characterized and specified particularly in connection with the figures.

The present invention discloses a motor vehicle comprising: a rear door mounted to the motor vehicle by means of a mounting system such that the rear door is movable between a closed position and a fully open position; the mounting system comprises a first holding means comprising a first bracket mounted to the rear door, the first bracket being movably engaged with an elongated rail along a first portion of said elongated rail, and being hingedly engaged with said elongated rail at one end thereof, the elongated rail being fixedly mounted to the vehicle; whereby the rear door is movable from said closed position to a first intermediate position via a first, mainly vertical movement, and is further movable to a second intermediate position via a second, mainly vertical movement, and is further movable to a fully open position via a third, rotational movement.

According to the invention the mounting system further comprises a second holding means comprising a second bracket mounted to the rear door, the second bracket being connected to a piston which is movably engaged with a cylinder, the cylinder being hingedly mounted to the vehicle, whereby the first holding means further comprises a first wheel and a second wheel and a stopper element; the first wheel being adapted for moving inside said elongated rail between a lower position and an upper position below the stopper element during the first and second movements, and for remaining in its upper position during the third movement; the second wheel being adapted for moving inside the elongated rail between a lower position and an upper position below the stopper element during the first movement, and for leaving the elongated rail by passing the stopper element during the second movement, and for (e.g. freely) moving outside of the elongated rail during the third movement.

It is an advantage of this mounting system that access to the vehicle can be provided without having to completely open the rear door, which is fast.

It is a further advantage of this mounting system that the rear door can be opened without requiring a lot of space behind the vehicle, for example typically requiring a distance less than half the height of the rear door.

It is a further advantage of this mounting system that it requires only few components, which are easy to mount and/or to replace and/or to repair.

It is a further advantage of this mounting system that it does not require a lateral or transverse movement for opening the door, but only an upward (e.g. substantially vertical) movement, and if the rear door needs to be opened completely, also an additional rotational movement. That is easier to handle by a user.

It is an advantage of using a first and a second wheel which are movable relative to the elongated guid rail rather than a carriage, because the friction of a wheel is lower than that of a carriage, and because it is easier to re-insert the second wheel into the elongated rail, when closing the rear door.

It is an advantage of using a stopper element that allows passage of the second (upper) wheel, but not the first (lower) wheel, because it reduces the risk that the rear door is inadvertently unmounted from the vehicle.

According to a further advantageous embodiment of the present invention, the first wheel and the second wheel are each attached to the first bracket, particularly to one end of the first bracket.

It is an advantage of engaging the first bracket to the elongated rail by at least one wheel in that the wheel allows for a movable as well as a hinged engagement between the first bracket and the elongated rail at the same time.

It is a further advantage of engaging the first bracket to the elongated rail by two wheels in that, while both wheels are engaged with the elongated rail, the rear door connected to the first bracket is substantially prevented from being inadvertently rotated during the first (vertical) movement. Only after disengaging the second wheel from the elongated rail during the second (vertical) movement the rear door can be rotated in the desired manner during the third (rotational) movement.

According to a further advantageous embodiment of the present invention, the first wheel and the second wheel are each rotatably attached to the first bracket. This allows for moving the first and second wheels within the elongated rail with less friction, thus rendering the operation, i.e. opening and closing, of the rear door more convenient.

According to a further advantageous embodiment of the present invention, a center of the rotation of the rear door (during the third movement) coincides with the position of the first wheel when in abutment with the stopper element.

It is an advantage of using a stopper element that allows passage of the second (upper) wheel, but not the first (lower) wheel, because by doing so, the rear door can perform a pivotal movement or rotation about the first wheel at a well defined position relative to the vehicle.

According to a further advantageous embodiment of the present invention, the elongated rail is substantially U-shaped for guiding the first and second wheel.

It is an advantage of using a U-shaped rail that is strong, especially against bending forces.

According to a further advantageous embodiment of the present invention, the stopper element is a spring or comprises a spring.

According to a further advantageous embodiment of the present invention, the spring is Z-shaped.

It is an advantage of using a Z-shaped spring that by can be arranged inside the rail, and requires no winding or other complex ways to mount the spring.

According to a further advantageous embodiment of the present invention, the cylinder and piston contains gas or a spring arranged for biasing the rear door toward the first intermediate position.

It is an advantage of using a cylinder with gas or with a spring because it reduces the force required by the user to open the rear door (which has to be lifted against the gravity force). The spring may also be dimensioned so as to keep the rear door in its first intermediate position, without the user having to hold the rear door. Alternatively, there may be a blocking mechanism for preventing the first wheel to be lowered until the user explicitly decides to do so.

According to a further advantageous embodiment of the present invention, the elongated rail is substantially straight.

It is an advantage that a straight U-shaped rail can be easily produced. A curved U-shaped rail is more difficult to produce, and thus more expensive.

According to a further advantageous embodiment of the present invention, the motor vehicle is a so called small commercial vehicle or a small delivery truck or a van.

It is an advantage that the mounting system is ideally suited for these types of vehicles, which are typically used for fast and frequent unloading of consumer goods, without having to completely open the rear door.

The present invention discloses a method of operating a rear door of a vehicle, wherein the rear door is mounted to the vehicle by means of a mounting system such that the rear door is movable between a closed position and a fully open position, wherein the mounting system comprises: a first holding means comprising a first bracket mounted to the rear door, the first bracket being movably engaged with an elongated rail along a first portion of said elongated rail, and being hingedly engaged with said elongated rail at one end thereof, the elongated rail being fixedly mounted to the vehicle; a second holding means comprising a second bracket mounted to the rear door, the second bracket being hingedly connected to a piston which is movably engaged with a cylinder, the cylinder being hingedly mounted to the vehicle; wherein, for fully opening the rear door, the method comprises the steps of: i) lifting the rear door from said closed position to a first intermediate position via a first, mainly vertical movement thereby moving the first bracket relative to the elongated rail along said first portion of said elongated rail; ii) further lifting the rear door to a second intermediate position via a second, mainly vertical movement thereby further moving the first bracket relative to the elongated rail along said first portion of said elongated rail up to or partly beyond said one end thereof thus enabling a movement of the hinged engagement between the first bracket and the elongated rail; and iii) moving the rear door to said fully open position via a third, pure rotational movement thereby swivelling the first bracket relative to the elongated rail utilizing the hinged engagement between the first bracket and the elongated rail.

The first holding means further comprises a first wheel and a second wheel and a stopper element, wherein the afore-mentioned steps (i), (ii), and (iii) include: moving the first wheel inside said elongated rail between a lower position and an upper position below the stopper element during the first and second movements, and maintaining the first wheel in the upper position abutting against the stopper element during the third movement; and moving the second wheel inside the elongated rail between a lower position and an upper position below the stopper element during the first movement, and disengaging the second wheel from the elongated rail by passing the stopper element during the second movement, and moving the second wheel outside of the elongated rail during the third movement (M3).

FIG. 1 is a cross-section of a half of a vehicle with a side door mounting mechanism known in the art. This side door can be opened by three steps: a transverse movement, a vertical movement, and a rotational movement. Further features and advantages of the present invention will become apparent from the following description of a non-limiting embodiment of the invention which will be explained below with reference to the drawing, wherein:
- FIG. 2(a): is a perspective view of a portion of an exemplary vehicle with a rear door mounting mechanism according to an embodiment of the present invention. In FIG. 2(a) the rear door is in its closed position.
- FIG. 2(b): is a schematic representation of the rear door mounting mechanism of FIG. 2(a). The full lines indicate the closed position. The dotted lines indicate a first intermediate position.
- FIG. 3(a): shows the vehicle of FIG. 2 when the rear door is moved to a second intermediate position.
- FIG. 3(b): is a schematic representation of the rear door mounting mechanism of FIG. 3(a).
- FIG. 4(a): shows the vehicle of FIG. 2 with the rear door in its fully open position.
- FIG. 4(b): is a schematic representation of the rear door mounting mechanism of FIG. 4(a).
- FIG. 5: shows a portion of the rear door mounting mechanism of FIG. 2(a) (referred to herein as the "first holding means") in more detail.
- FIG. 6: shows a portion of the rear door mounting mechanism of FIG. 2(a) (referred to herein as the "second holding means") in more detail.

In the various figures, equivalent elements with respect to their function are always provided with the same reference numerals so that these elements are usually described only once.

FIG. 1 is a cross-section of a half of a vehicle with a side door mounting mechanism known from DE 10 2015 012 144 A1, cited in the background section above. This side door can be opened in three steps. The first step S1 is a movement in the width direction of the vehicle (herein also referred to as a transversal movement), the second step S2 is a vertical movement, and the third step S3 is a pivotal movement as indicated by respective arrows in FIG. 1. While the movements of the side door are described in the document, the mounting mechanism of how these movements can be obtained, is not clearly described.

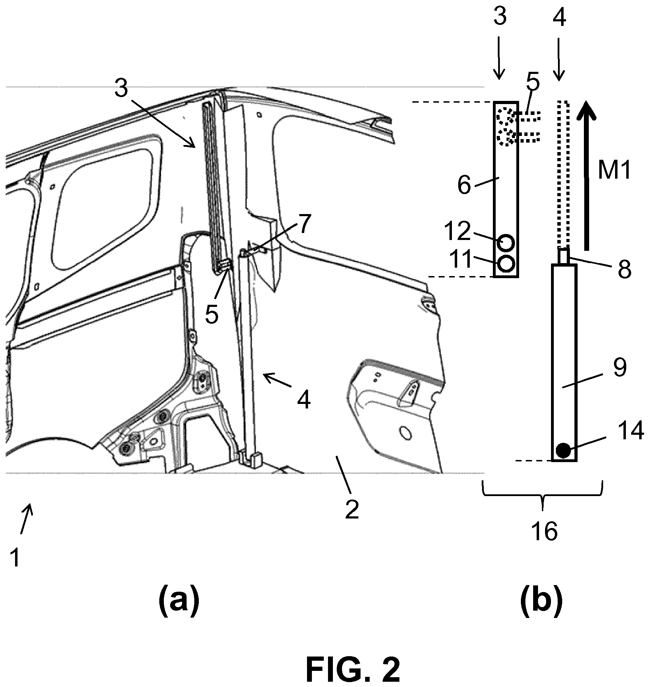

FIG. 2(a) is a perspective view of a portion of an exemplary vehicle 1 according to an embodiment of the present invention. The vehicle 1 has a rear door 2 having a single panel. The rear door 2 is shown in its closed position.

The rear door 2 is mounted to the vehicle 1 by means of a mounting mechanism 16 comprising a first holding means 3 and a second holding means 4.

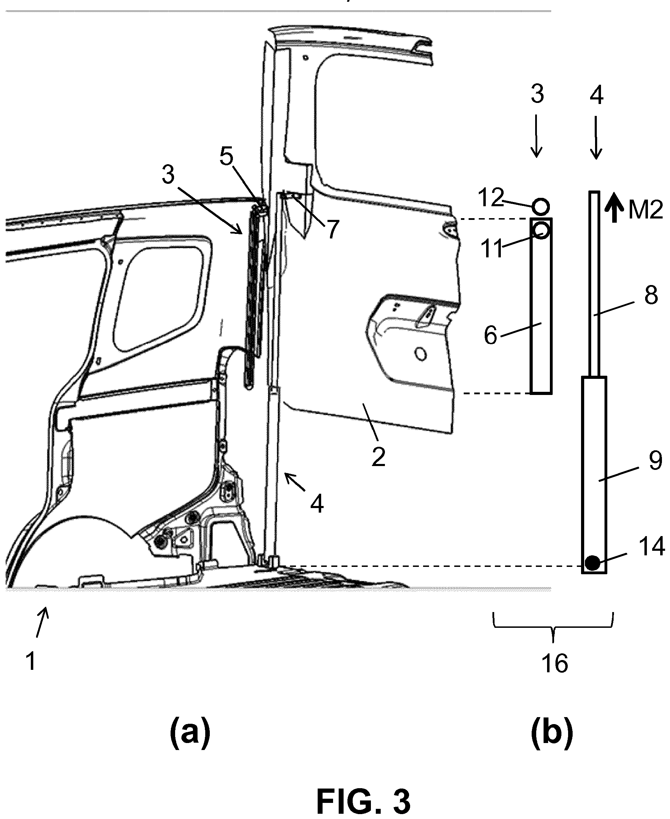

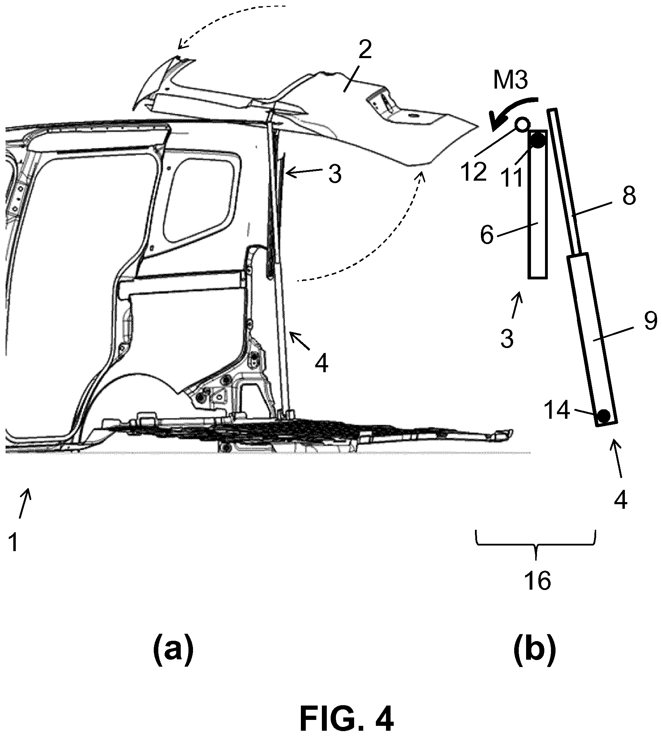

The first and second holding means 3, 4 cooperate such that the rear door 2 is movable from a closed position (shown in FIG. 2 in full line) to a first intermediate position (shown in FIG. 2b in dotted lines) via a first, mainly vertical movement M1. As will be described further below, the rear door 2 is further movable to a second intermediate position (shown in FIG. 3) via a (relatively small) second, mainly vertical movement M2, and is further movable to a fully open position (shown in FIG. 4) via a third, rotational movement M3.

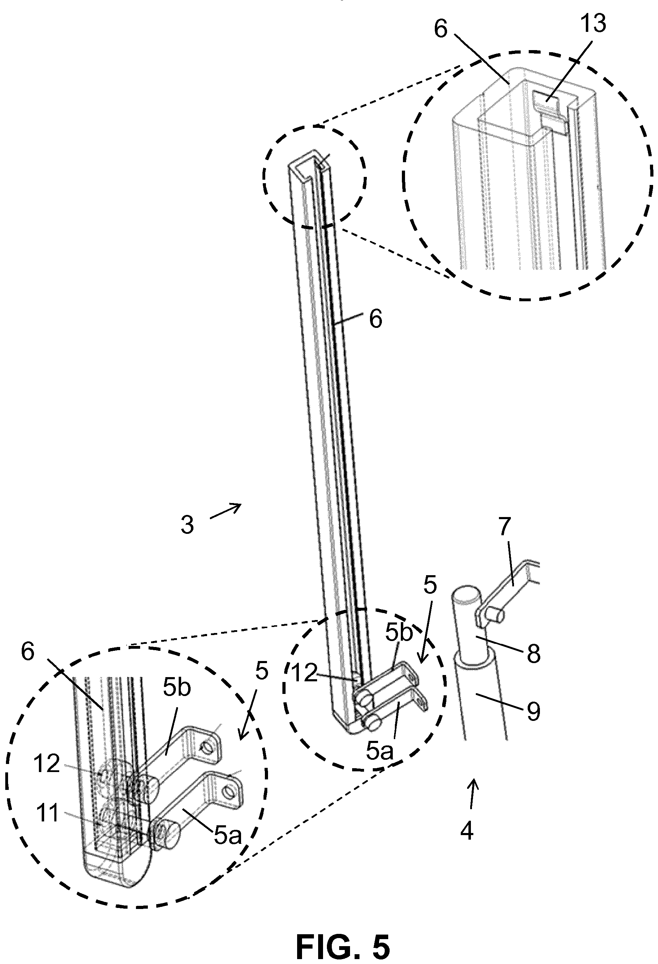

Referring to FIG. 2a and FIG. 2b, but better visible in FIG. 5, the first holding means 3 comprises a first bracket 5 mounted to the rear door 2. The first bracket 5 is movably engaged with an elongated rail 6 along a first portion thereof, namely from a lower end of the rail 6 (which is the position of the bracket 5 shown in FIG. 5) to a position slightly below the upper end of the rail 6 (indicated by dots in FIG. 2b). The elongated rail 6 is oriented upright, e.g. substantially vertically, and is fixedly mounted to the vehicle 1.

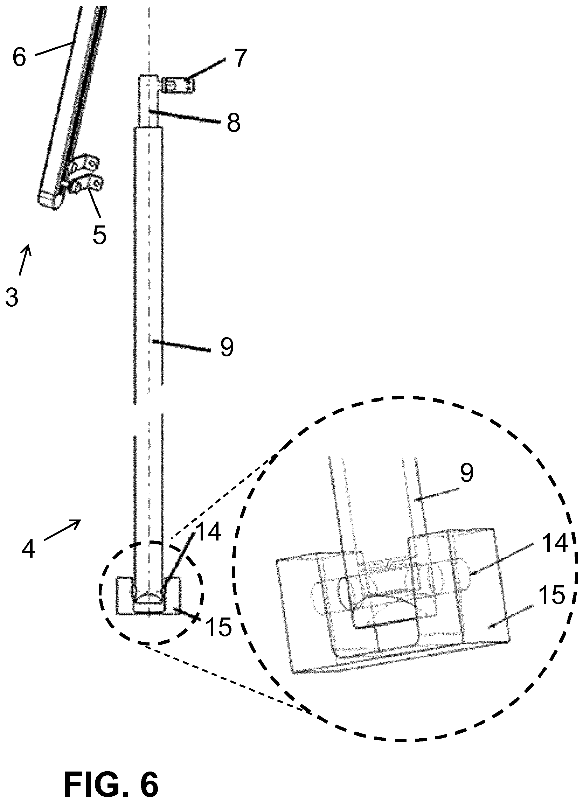

Referring to FIG. 2(a) and FIG. 2(b), but better visible in FIG. 6, The second holding means 4 comprises a second bracket 7 mounted to the rear door 2. The second bracket 7 is hingedly connected to a piston 8 (see FIG. 5) which piston is movably engaged with a cylinder 9. The cylinder 9 is hingedly mounted (see FIG. 6) to the vehicle 1 by means of a base or foot 15 and an axis or pin 14 interconnecting the cylinder 9 and the foot 15.

FIG. 2(b) is a schematic representation of the mounting mechanism 16 of FIG. 2(a).

The first holding means 3 further comprises a first wheel 11 and a second wheel 12 arranged inside the elongated rail 6, and a stopper element 13 (not visible in FIG. 2 but see FIG. 5).

The first wheel 11 is adapted for moving inside the elongated rail 6 between a first, lower position and a second, upper position during the first movement M1. The upper position of the first wheel 11 is below the stopper element 13. As will be explained further below, the first wheel 11 will remain inside the elongated rail 6 also during the second, mainly vertical movement M2 and during the third, rotational movement M3.

The second wheel 12 is adapted for moving inside the elongated rail 6 between a third, lower position and a fourth, upper position during the first movement M1. In its upper position, the second wheel 12 preferably abuts the stopper element 13. This position is indicated by dotted lines in FIG. 2(b). As will be explained further below, however, the second wheel 12 can leave the elongated rail 6 by passing the stopper element 13 during the second movement M2, and can freely move outside of the elongated rail 6 during the third movement M3.

The different behaviour for the first wheel 11 and the second wheel 12 can for example be implemented by using a second wheel 12 with a circumferential groove, and a first wheel 11 without such a circumferential groove. The dimensions of the groove (width and depth) can be chosen such that the stopper element 13 fits inside the groove, and thus the second wheel 12 can pass the stopper element 13.

Looking back to FIG. 2(a) and FIG. 2(b), it can thus be appreciated that during the first movement M1, the two wheels 11, 12 simply move upwards inside the rail 6, and the piston 8 simply extends from the cylinder 9, when the rear door 2 is lifted. During this first movement M1, the rear door 2 performs mainly a vertical displacement or translation. Alternatively, the rear door may slightly rotate, for example over an angle up to about 30 °, preferably only up to about 20 ° or even only up to about 10 °, during the first movement M1. This may render the first movement M1 more conveniently for a user operating or gripping the rear door 2.

When the wheels 11, 12 are at their lower positions, the rear door 2 is in its closed position. When the second wheel 12 is at its upper position abutting the stopper element 13 but still inside the elongated rail 6, the rear door 2 is in its first intermediate position.

Although not explicitly shown, the mounting system may have means for keeping the rear door 2 in the first intermediate position, for example using a cylinder 9 with gas or with a spring for biasing the piston or rod 8 outwardly, or a strap, or any other suitable means.

FIG. 3(a) shows the vehicle 1 of FIG. 2 when the rear door 2 is moved from the first intermediate position to a second intermediate position, wherein the second (upper) wheel 12 has moved out of the elongated rail 6, but before the rear door 2 is rotated.

FIG. 3(b) is a schematic representation of the rear door mounting mechanism 16 better illustrating this condition. As suggested by the small arrow M2, the second movement M2 is only a relatively small movement, and is oriented mainly vertically upwards.

Although not shown in FIG. 3, it can be appreciated that, when the second wheel 12 has left the elongated rail 6, the rear door 2 can be rotated about the first wheel 11, as shown in FIG. 4(b), where the first wheel 11 is colored black for illustrative purposes.

FIG. 4(a) shows the vehicle 1 of FIG. 2 when the rear door 2 in its fully open position, after performing the third, rotational movement M3. As can be seen in FIG. 4(b) the second wheel 12 is located outside of the elongated rail 6 whereas the first wheel 11 remains inside the elongated rail 6.

FIG. 5 shows a portion of the rear door mounting mechanism 16 in more detail.

FIG. 5 shows that the elongated rail 6 is preferably a U-shaped rail for guiding the first and second wheels 11, 12.

FIG. 5 also shows the first bracket 5, in this example shown as two separate L-shaped elements 5a, 5b, but that is not absolutely required for the invention to work, and a single first bracket 5 may also be used. The two L-shaped bracket elements 5a, 5b may also be rigidly interconnected, e.g. by one or more connecting beams (not shown), thus forming a single first bracket 5. The first bracket 5 (here represented by the two individual first bracket elements 5a, 5b) is fixedly mounted to the rear door 2.

Furthermore, FIG. 5 shows that the first wheel 11 is attached to one end of the lower bracket element 5a and the second wheel 12 is attached to one end of the upper bracket element 5b. Preferably, both wheels 11, 12 each may be rotatably attached to their respective bracket elements 5a, 5b. This allows for moving the wheels 11 and 12 inside the elongated rail 6 with less friction, thus rendering the operation, i.e. opening and closing, of the rear door 2 more convenient to an operator of the rear door 2.

It is to be understood that, if there is only one single first bracket 5, both wheels 11 and 12 may be attached to the single first bracket 5 in the manner set forth herein.

FIG. 5 also shows the second bracket 7, in this example shown as a single L-shaped element 7, but that is not absolutely required for the invention to work. The second bracket 7 is also fixedly mounted to the rear door 2.

In other words, the rear door 2 is held by the first and second brackets 5, 7 at the left side of the vehicle and the right side of the vehicle (only the right side is shown in FIG. 2 to FIG. 4).

FIG. 5 also shows an example of a stopper element 13 attached to the elongated rail 6, wherein the stopper element 13 is adapted for allowing passage of the second wheel 12, but for preventing the first wheel 11 to leave the elongated rail 6.

The stopper element 13 may be a spring or may comprise a spring, for example a Z-shaped spring. When the second wheel 12 abuts the spring 13, the user feels that the rear door 2 is in its first intermediate position. In order for the second wheel 12 to pass beyond the stopper element 13, he has to exert a predefined force, which is defined by the dimensions of the spring 13 and/or its spring force as well as by the dimensions of the outer diameter of the second wheel and/or a circumferential groove therein.

The elongated rail 6 is preferably substantially straight. Such a rail 6 is easy to produce and mount.

FIG. 6 shows another portion of the rear door mounting mechanism 16 in more detail, namely the second holding means 4, comprising the cylinder 9 and the piston or rod 8. As can be seen, the cylinder 9 is hingedly mounted to the vehicle, for example using a base or foot element 15 comprising an axis or pin 14.

The cylinder 9 and piston 8 may be a gas spring. The gas spring may be arranged for biasing the rear door 2 toward the first intermediate position shown in FIG. 2(b) in dotted lines.

From the above, it can be understood that, in order to partially open the rear door 2 of the vehicle 1, the rear door 2 can simply be lifted, causing the rear door 2 to perform the first, mainly vertical movement M1 from the closed position to the first intermediate position. As described above, during this first movement, the two wheels 11 and 12 remain inside the elongated rail 6.

It can also be understood that, in order to fully open the rear door 2 of the vehicle, the user would have to apply the following steps:
i) lifting the rear door 2 such that the rear door 2 performs the first, mainly vertical movement M1 from the closed position to the first intermediate position, as described above;
ii) lifting the rear door 2 slightly further such that the rear door 2 performs the second, mainly vertical movement M2 from the first intermediate position to a second intermediate position (shown in FIG. 3). During this step the second wheel 12 leaves the elongated rail 6, but the first wheel 11 stays inside the elongated rail 6 and may abut against the stopper element 13 attached to the upper end of the elongated rail 6.
iii) rotating the rear door 2 such that the rear door 2 performs the third, rotational movement from the second intermediate position to the fully open position, illustrated in FIG. 4. During this step, the rear door 2 rotates about the first wheel 11, colored in black for illustrative purposes.

The mounting system described above is particularly useful for so called "small commercial vehicles", also known as "small van" or "van" or small delivery truck. The rear door 2 does not require a lot of clearance behind the vehicle 1, hence can even be opened in small parking places. Moreover, the rear door does not have to be opened completely, but it often suffices that the rear door 2 is only partially opened to its first intermediate position, which requires even less space, and moreover is fast and convenient, for example for a delivery person having to deliver boxes to end customers at their homes.

### REFERENCE NUMERALS

- 1: motor vehicle
- 2: rear door
- 3: first holding means
- 4: second holding means
- 5: first bracket
- 5a: L-shaped bracket element of 5
- 5b: L-shaped bracket element of 5
- 6: elongated rail
- 7: second bracket
- 8: piston
- 9: cylinder
- 10: axis or pin
- 11: first wheel
- 12: second wheel
- 13: stopper element
- 14: axis or pin
- 15: cylinder foot
- 16: rear door mounting mechanism
- M1: first movement
- M2: second movement
- M3: third movement

## Claims

1. A motor vehicle (1) comprising:
- a rear door (2) mounted to the motor vehicle (1) by means of a mounting system (16) such that the rear door (2) is movable between a closed position and a fully open position;
- the mounting system (16) comprises a first holding means (3) comprising a first bracket (5) mounted to the rear door (2), the first bracket (5) being movably engaged with an elongated rail (6) along a first portion of said elongated rail (6), and being hingedly engaged with said elongated rail (6) at one end thereof, the elongated rail (6) being fixedly mounted to the vehicle (1);
- whereby the rear door (2) is movable from said closed position to a first intermediate position via a first, mainly vertical movement (M1), and is further movable to a second intermediate position via a second, mainly vertical movement (M2), and is further movable to a fully open position via a third, rotational movement (M3)
**characterised in that**
the mounting system (16) further comprises a second holding means (4) comprising a second bracket (7) mounted to the rear door (2), the second bracket (7) being hingedly connected to a piston (8) which is movably engaged with a cylinder (9), the cylinder (9) being hingedly mounted to the vehicle (1), whereby the first holding means (3) further comprises a first wheel (11) and a second wheel (12) and a stopper element (13);
- the first wheel (11) being adapted for moving inside said elongated rail (6) between a lower position and an upper position below the stopper element (13) during the first and second movements (M1, M2), and for remaining in the upper position during the third movement (M3);
- the second wheel (12) being adapted for moving inside the elongated rail (6) between a lower position and an upper position below the stopper element (13) during the first movement (M1), and for leaving the elongated rail (6) by passing the stopper element (13) during the second movement (M2), and for moving outside of the elongated rail (6) during the third movement (M3).

2. The motor vehicle (1) according to claim 1, **characterised in that** the first wheel (11) and the second wheel (12) are each attached to the first bracket (5).

3. The motor vehicle (1) according to claim 2, **characterised in that** the first wheel (11) and the second wheel (12) are each rotatably attached to the first bracket (5).

4. The motor vehicle (1) according to any of the claim 1 to 3, **characterised in that** a center of the rotation of the rear door (2) coincides with the position of the first wheel (11) in abutment with the stopper element (13).

5. The motor vehicle (1) according to any of the claims 1 to 4, **characterised in that** the elongated rail (6) is substantially U-shaped for guiding the first and second wheels (11, 12).

6. The motor vehicle (1) according to any of the claims 1 to 5, **characterised in that** the stopper element (13) is a spring or comprises a spring.

7. The motor vehicle (1) according to claim 6, **characterised in that** the spring is Z-shaped.

8. The motor vehicle (1) according to any of the previous claims, **characterised in that** the cylinder (9) and piston (8) contains gas or a spring for biasing the rear door (2) toward the first intermediate position.

9. The motor vehicle (1) according to any of the previous claims, **characterised in that** the elongated rail (6) is substantially straight.

10. The motor vehicle (1) according to any of the previous claims, wherein the motor vehicle (1) is a small commercial vehicle or a small delivery truck or a van.

11. A method of operating a rear door (2) of a vehicle (1), particularly according to any of the previous claims wherein the rear door (2) is mounted to the vehicle (1) by means of a mounting system (16) such that the rear door (2) is movable between a closed position and a fully open position, wherein the mounting system (16) comprises:
- a first holding means (3) comprising a first bracket (5) mounted to the rear door (2), the first bracket (5) being movably engaged with an elongated rail (6) along a first portion of said elongated rail (6), and being hingedly engaged with said elongated rail (6) at one end thereof, the elongated rail (6) being fixedly mounted to the vehicle (1);
- a second holding means (4) comprising a second bracket (7) mounted to the rear door (2), the second bracket (7) being hingedly connected to a piston (8) which is movably engaged with a cylinder (9), the cylinder (9) being hingedly mounted to the vehicle (1);
wherein, for fully opening the rear door (2), the method comprises the steps of:
i) lifting the rear door (2) from said closed position to a first intermediate position via a first, mainly vertical movement (M1) thereby moving the first bracket (5) relative to the elongated rail (6) along said first portion of said elongated rail (6);
ii) further lifting the rear door (2) to a second intermediate position via a second, mainly vertical movement (M2) thereby further moving the first bracket (5) relative to the elongated rail (6) along said first portion of said elongated rail (6) up to or partly beyond said one end thereof thus enabling a movement of the hinged engagement between the first bracket (5) and the elongated rail (6); and
iii) moving the rear door (2) to said fully open position via a third, pure rotational movement (M3) thereby swivelling the first bracket (5) relative to the elongated rail (6) utilizing the hinged engagement between the first bracket (5) and the elongated rail (6),
wherein the first holding means (3) further comprises a first wheel (11) and a second wheel (12) and a stopper element (13), wherein the steps (i), (ii), and (iii) include:
- moving the first wheel (11) inside said elongated rail (6) between a lower position and an upper position below the stopper element (13) during the first and second movements (M1, M2), and maintaining the first wheel (11) in the upper position abutting against the stopper element (13) during the third movement (M3); and
- moving the second wheel (12) inside the elongated rail (6) between a lower position and an upper position below the stopper element (13) during the first movement (M1), and disengaging the second wheel (12) from the elongated rail (6) by passing the stopper element (13) during the second movement (M2), and moving the second wheel (12) outside of the elongated rail (6) during the third movement (M3).

## Patentansprüche

1. Kraftfahrzeug (1), umfassend:
- eine Heckklappe (2), die mithilfe eines Montagesystems (16) an dem Kraftfahrzeug (1) derart montiert ist, dass die Heckklappe (2) zwischen einer geschlossenen Position und einer vollständig geöffneten Position bewegbar ist;
- wobei das Montagesystem (16) ein erstes Haltemittel (3) mit einem an der Heckklappe (2) montierten ersten Bügel (5) umfasst, wobei der erste Bügel (5) mit einer länglichen Schiene (6) entlang eines ersten Abschnitts der länglichen Schiene (6) bewegbar in Eingriff steht und mit der länglichen Schiene (6) an einem Ende davon klappbar in Eingriff steht, wobei die längliche Schiene (6) fest an dem Fahrzeug (1) montiert ist;
- wobei die Heckklappe (2) über eine erste, hauptsächlich vertikale Bewegung (M1) von der geschlossenen Position zu einer ersten Zwischenposition bewegbar ist und weiter über eine zweite, hauptsächlich vertikale Bewegung (M2) zu einer zweiten Zwischenposition bewegbar ist und weiter über eine dritte, rotatorische Bewegung (M3) zu einer vollständig geöffneten Position bewegbar ist
**dadurch gekennzeichnet, dass**
das Montagesystem (16) ferner ein zweites Haltemittel (4) mit einem an der Heckklappe (2) montierten zweiten Bügel (7) umfasst, wobei der zweite Bügel (7) klappbar mit einem Kolben (8) verbunden ist, der mit einem Zylinder (9) bewegbar in Eingriff steht, wobei der Zylinder (9) klappbar an dem Fahrzeug (1) montiert ist, wobei das erste Haltemittel (3) ferner ein erstes Rad (11) und ein zweites Rad (12) und ein Anschlagelement (13) umfasst;
- das erste Rad (11) für ein Bewegen innerhalb der länglichen Schiene (6) zwischen einer unteren Position und einer oberen Position unterhalb des Anschlagelements (13) während der ersten und zweiten Bewegungen (M1, M2) und zum Verbleiben in der oberen Position während der dritten Bewegung (M3) ausgelegt ist;
- das zweite Rad (12) für ein Bewegen innerhalb der länglichen Schiene (6) zwischen einer unteren Position und einer oberen Position unterhalb des Anschlagelements (13) während der ersten Bewegung (M1) und zum Verlassen der länglichen Schiene (6) durch Passieren des Anschlagelements (13) während der zweiten Bewegung (M2) und zum Bewegen außerhalb der länglichen Schiene (6) während der dritten Bewegung (M3) ausgelegt ist.

2. Kraftfahrzeug (1) nach Anspruch 1, **dadurch gekennzeichnet, dass** das erste Rad (11) und das zweite Rad (12) jeweils an dem ersten Bügel (5) angebracht sind.

3. Kraftfahrzeug (1) nach Anspruch 2, **dadurch gekennzeichnet, dass** das erste Rad (11) und das zweite Rad (12) jeweils rotatorisch an dem ersten Bügel (5) angebracht sind.

4. Kraftfahrzeug (1) nach einem der Ansprüche 1 bis 3, **dadurch gekennzeichnet, dass** sich ein Rotationszentrum der Heckklappe (2) mit der Position des ersten Rads (11) in Anlagekontakt mit dem Anschlagelement (13) deckt.

5. Kraftfahrzeug (1) nach einem der Ansprüche 1 bis 4, **dadurch gekennzeichnet, dass** die längliche Schiene (6) im Wesentlichen U-förmig zum Führen der ersten und zweiten Räder (11, 12) ist.

6. Kraftfahrzeug (1) nach einem der Ansprüche 1 bis 5, **dadurch gekennzeichnet, dass** das Anschlagelement (13) eine Feder ist oder eine Feder umfasst.

7. Kraftfahrzeug (1) nach Anspruch 6, **dadurch gekennzeichnet, dass** die Feder Z-förmig ist.

8. Kraftfahrzeug (1) nach einem der vorhergehenden Ansprüche, **dadurch gekennzeichnet, dass** der Zylinder (9) und der Kolben (8) Gas oder eine Feder zum Vorspannen der Heckklappe (2) hin zu der ersten Zwischenposition enthalten.

9. Kraftfahrzeug (1) nach einem der vorhergehenden Ansprüche, **dadurch gekennzeichnet, dass** die längliche Schiene (6) im Wesentlichen gerade ist.

10. Kraftfahrzeug (1) nach einem der vorhergehenden Ansprüche, wobei das Kraftfahrzeug (1) ein kleines Nutzfahrzeug oder ein kleiner Lieferwagen oder ein Transporter ist.

11. Verfahren zum Betätigen einer Heckklappe (2) eines Fahrzeugs (1), insbesondere nach einem der vorhergehenden Ansprüche, wobei die Heckklappe (2) mithilfe eines Montagesystems (16) an dem Fahrzeug (1) derart montiert ist, dass die Heckklappe (2) zwischen einer geschlossenen Position und einer vollständig geöffneten Position bewegbar ist, wobei das Montagesystem (16) umfasst:
- ein erstes Haltemittel (3) mit einem an der Heckklappe (2) montierten ersten Bügel (5), wobei der erste Bügel (5) mit einer länglichen Schiene (6) entlang eines ersten Abschnitts der länglichen Schiene (6) bewegbar in Eingriff steht und mit der länglichen Schiene (6) an einem Ende davon klappbar in Eingriff steht, wobei die längliche Schiene (6) fest an dem Fahrzeug (1) montiert ist;
- ein zweites Haltemittel (4) mit einem an der Heckklappe (2) montierten zweiten Bügel (7), wobei der zweite Bügel (7) klappbar mit einem Kolben (8) verbunden ist, der mit einem Zylinder (9) bewegbar in Eingriff steht, wobei der Zylinder (9) klappbar an dem Fahrzeug (1) montiert ist;
wobei, zum vollständigen Öffnen der Heckklappe (2), das Verfahren die folgenden Schritte umfasst:
i) Anheben der Heckklappe (2) von der geschlossenen Position zu einer ersten Zwischenposition über eine erste, hauptsächlich vertikale Bewegung (M1), wodurch der erste Bügel (5) in Relation zu der länglichen Schiene (6) entlang des ersten Abschnitts der länglichen Schiene (6) bewegt wird;
ii) weiter Anheben der Heckklappe (2) zu einer zweiten Zwischenposition über eine zweite, hauptsächlich vertikale Bewegung (M2), wodurch der erste Bügel (5) in Relation zu der länglichen Schiene (6) entlang des ersten Abschnitts der länglichen Schiene (6) weiter nach oben oder teilweise über das Ende davon hinaus bewegt wird, wodurch eine Bewegung des klappbaren Eingriffs zwischen dem ersten Bügel (5) und der länglichen Schiene (6) ermöglicht wird; und
iii) Bewegen der Heckklappe (2) zu der vollständig geöffneten Position über eine dritte, rein rotatorische Bewegung (M3), wodurch der erste Bügel (5) in Relation zu der länglichen Schiene (6) unter Nutzung des klappbaren Eingriffs zwischen dem ersten Bügel (5) und der länglichen Schiene (6) geschwenkt wird,
wobei das erste Haltemittel (3) ferner ein erstes Rad (11) und ein zweites Rad (12) und ein Anschlagelement (13) umfasst, wobei die Schritte (i), (ii) und (iii) umfassen:
- Bewegen des ersten Rads (11) innerhalb der länglichen Schiene (6) zwischen einer unteren Position und einer oberen Position unterhalb des Anschlagelements (13) während der ersten und zweiten Bewegungen (M1, M2) und Halten des ersten Rads (11) in der oberen Position in Anlagekontakt mit dem Anschlagelement (13) während der dritten Bewegung (M3); und
- Bewegen des zweiten Rads (12) innerhalb der länglichen Schiene (6) zwischen einer unteren Position und einer oberen Position unterhalb des Anschlagelements (13) während der ersten Bewegung (M1) und Lösen des zweiten Rads (12) von der länglichen Schiene (6) durch Passieren des Anschlagelements (13) während der zweiten Bewegung (M2) und Bewegen des zweiten Rads (12) außerhalb der länglichen Schiene (6) während der dritten Bewegung (M3) .

## Revendications

1. Véhicule à moteur (1) comprenant :
une porte arrière (2) montée sur le véhicule à moteur (1) au moyen d'un système de montage (16) de sorte que la porte arrière (2) puisse être déplacée entre une position fermée et une position entièrement ouverte ;
le système de montage (16) comprenant un premier moyen de maintien (3) comprenant un premier support (5) monté sur la porte arrière (2), le premier support (5) étant en prise mobile avec un rail allongé (6) le long d'une première partie dudit rail allongé (6), et étant en prise articulée avec ledit rail allongé (6) au niveau d'une extrémité de celui-ci, le rail allongé (6) étant monté de manière fixe sur le véhicule (1) ;
la porte arrière (2) pouvant être déplacée de ladite position fermée à une première position intermédiaire par l'intermédiaire d'un premier mouvement (M1) principalement vertical, et pouvant en outre être déplacée vers une seconde position intermédiaire par l'intermédiaire d'un deuxième mouvement (M2) principalement vertical, et pouvant en outre être déplacée vers une position entièrement ouverte par l'intermédiaire d'un troisième mouvement (M3) de rotation
**caractérisé en ce que**
le système de montage (16) comprend en outre un second moyen de maintien (4) comprenant un second support (7) monté sur la porte arrière (2), le second support (7) étant articulé sur un piston (8) qui est en prise mobile avec un cylindre (9), le cylindre (9) étant articulé sur le véhicule (1), moyennant quoi
le premier moyen de maintien (3) comprend en outre une première roue (11) et une seconde roue (12) et un élément d'arrêt (13) ;
la première roue (11) étant conçue pour se déplacer à l'intérieur dudit rail allongé (6) entre une position inférieure et une position supérieure sous l'élément d'arrêt (13) pendant les premier et deuxième mouvements (M1, M2), et pour rester dans la position supérieure pendant le troisième mouvement (M3) ;
la seconde roue (12) étant conçue pour se déplacer à l'intérieur du rail allongé (6) entre une position inférieure et une position supérieure sous l'élément d'arrêt (13) pendant le premier mouvement (M1), et pour quitter le rail allongé (6) en passant l'élément d'arrêt (13) pendant le deuxième mouvement (M2), et pour se déplacer à l'extérieur du rail allongé (6) pendant le troisième mouvement (M3).

2. Véhicule à moteur (1) selon la revendication 1, **caractérisé en ce que** la première roue (11) et la seconde roue (12) sont chacune fixées au premier support (5).

3. Véhicule à moteur (1) selon la revendication 2, **caractérisé en ce que** la première roue (11) et la seconde roue (12) sont chacune fixées de manière rotative au premier support (5).

4. Véhicule à moteur (1) selon l'une quelconque des revendications 1 à 3, **caractérisé en ce qu'**un centre de rotation de la porte arrière (2) coïncide avec la position de la première roue (11) en butée avec l'élément d'arrêt (13).

5. Véhicule à moteur (1) selon l'une quelconque des revendications 1 à 4, **caractérisé en ce que** le rail allongé (6) est sensiblement en forme de U pour guider les première et seconde roues (11, 12).

6. Véhicule à moteur (1) selon l'une quelconque des revendications 1 à 5, **caractérisé en ce que** l'élément d'arrêt (13) est un ressort ou comprend un ressort.

7. Véhicule à moteur (1) selon la revendication 6, **caractérisé en ce que** le ressort est en forme de Z.

8. Véhicule à moteur (1) selon l'une quelconque des revendications précédentes, **caractérisé en ce que** le cylindre (9) et le piston (8) contiennent du gaz ou un ressort pour solliciter la porte arrière (2) vers la première position intermédiaire.

9. Véhicule à moteur (1) selon l'une quelconque des revendications précédentes, **caractérisé en ce que** le rail allongé (6) est sensiblement droit.

10. Véhicule à moteur (1) selon l'une quelconque des revendications précédentes, le véhicule à moteur (1) étant un petit véhicule utilitaire ou un petit camion de livraison ou une fourgonnette.

11. Procédé de fonctionnement d'une porte arrière (2) d'un véhicule (1), en particulier selon l'une quelconque des revendications précédentes, la porte arrière (2) étant montée sur le véhicule (1) au moyen d'un système de montage (16) de sorte que la porte arrière (2) puisse être déplacée entre une position fermée et une position entièrement ouverte, le système de montage (16) comprenant :
un premier moyen de maintien (3) comprenant un premier support (5) monté sur la porte arrière (2), le premier support (5) étant en prise mobile avec un rail allongé (6) le long d'une première partie dudit rail allongé (6), et étant en prise articulée avec ledit rail allongé (6) au niveau d'une extrémité de celui-ci, le rail allongé (6) étant monté de manière fixe sur le véhicule (1) ;
un second moyen de maintien (4) comprenant un second support (7) monté sur la porte arrière (2), le second support (7) étant articulé sur un piston (8) qui est en prise mobile avec un cylindre (9), le cylindre (9) étant articulé sur le véhicule (1) ;
pour l'ouverture entière de la porte arrière (2), le procédé comprenant les étapes consistant à :
i) soulever la porte arrière (2) de ladite position fermée à une première position intermédiaire par l'intermédiaire d'un premier mouvement (M1) principalement vertical, déplaçant ainsi le premier support (5) par rapport au rail allongé (6) le long de ladite première partie dudit rail allongé (6) ;
ii) soulever davantage la porte arrière (2) vers une seconde position intermédiaire par l'intermédiaire d'un deuxième mouvement (M2) principalement vertical, déplaçant ainsi davantage le premier support (5) par rapport au rail allongé (6) le long de ladite première partie dudit rail allongé (6) jusqu'à ou partiellement au-delà de ladite une extrémité de celui-ci, permettant ainsi un mouvement de la mise en prise articulée entre le premier support (5) et le rail allongé (6) ; et
iii) déplacer la porte arrière (2) vers ladite position entièrement ouverte par l'intermédiaire d'un troisième mouvement (M3) de rotation pure, faisant ainsi pivoter le premier support (5) par rapport au rail allongé (6) à l'aide de la prise articulée entre le premier support (5) et le rail allongé (6),
le premier moyen de maintien (3) comprenant en outre une première roue (11) et une seconde roue (12) et un élément d'arrêt (13), les étapes (i), (ii) et (iii) comprenant les étapes consistant à :
déplacer la première roue (11) à l'intérieur dudit rail allongé (6) entre une position inférieure et une position supérieure sous l'élément d'arrêt (13) pendant les premier et deuxième mouvements (M1, M2), et maintenir la première roue (11) dans la position supérieure en butée contre l'élément d'arrêt (13) pendant le troisième mouvement (M3) ; et
déplacer la seconde roue (12) à l'intérieur du rail allongé (6) entre une position inférieure et une position supérieure sous l'élément d'arrêt (13) pendant le premier mouvement (M1), et séparer la seconde roue (12) du rail allongé (6) en passant l'élément d'arrêt (13) pendant le deuxième mouvement (M2), et déplacer la seconde roue (12) à l'extérieur du rail allongé (6) pendant le troisième mouvement (M3).
